(19)

Europäisches
Patentamt
European
Patent Office
Office européen
des brevets

(11) **EP 1 884 396 B1**

(12) **EUROPEAN PATENT SPECIFICATION**

(45) Date of publication and mention
of the grant of the patent:
**25.02.2009 Bulletin 2009/09**

(51) Int Cl.:
***B60K 23/04*** *(2006.01)*

(21) Application number: **06016310.2**

(22) Date of filing: **04.08.2006**

(54) **Method of adapting yaw rate error in controlling limited slip differentials**

Verfahren zur Anpassung des Gierrate-Fehlers bei der Steuerung von Schlupfbegrenzten Differentialen

Procédé d'adaptation du erreur de la vitesse de lacet dans différentielles à glissement limité

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**06.02.2008 Bulletin 2008/06**

(73) Proprietor: **GM Global Technology Operations,
Inc.
Detroit, MI 48265-3000 (US)**

(72) Inventors:
• **Carlen, Mattias
41311 Göteborg (SE)**

• **Yngve, Simon
41483 Göteborg (SE)**

(74) Representative: **Daniel, Ulrich W.P.
Adam Opel AG,
Patent- und Markenrecht A0-02
65423 Rüsselsheim (DE)**

(56) References cited:
**GB-A- 2 323 940       GB-A- 2 406 178
JP-A- 9 089 076       US-A1- 2004 163 856**

EP 1 884 396 B1

## Description

## FIELD OF THE INVENTION

The present invention generally relates to control strategies for electronically controlled limited slip differentials and particularly relates to a method of controlling torque transfer direction in an electronically controllable limited slip differential (LSD).

## BACKGROUND ART

In recent years, in automotive industries, more and more cars have been equipped with electronically controlled stability control systems on account of the fact that many of the severe traffic accidents result from a loss of control of the vehicle. Stability control systems typically employ the brakes to stabilize the vehicle in critical situations, which, however, necessarily results in a net-reduction of the vehicle's speed. Particularly in view of driving pleasure, instead of using the brakes, it seems more desirable to redistribute the driving force between the right and left wheels, which can be done limiting the allowable speed difference in the differential, e. g., using an electronically controlled limited slip differential.

Differentials as such are well-known in the prior art. They allow a pair of output shafts operatively coupled to an input shaft to rotate at different speeds, thereby allowing the wheel associated with each output shaft to maintain traction with the road while the vehicle is turning. More specifically, differentials essentially distribute the torque provided by the input shaft between the output shafts. Most modern cars often merely have a completely open differential which for most cases works in a satisfying manner.

Completely open differentials, however, are unsuitable in slippery conditions where one wheel experiences a much lower coefficient of friction than the other wheel, for example, when one wheel of a vehicle is located on a patch of ice and the other wheel is on dry pavement. In such a condition, the wheel experiencing the lower coefficient of friction loses traction and a small amount of torque to that wheel will cause a rapid spinning. Since the maximum amount of torque that can be developed on the wheel with traction is equal to the torque on the wheel without traction (i.e. the slipping wheel), the engine is unable to develop torque and the wheel with traction may be unable to rotate, with the result that the vehicle will stay stationary or move very slowly.

Up to date, a variety of limited slip differentials have been developped to limit wheel slippage under such conditions. Ideal LSDs act as varying differentials between their two extremal operating states i.e. completely engaged or not engaged. To this end, LSDs provided for limiting slippage typically use a frictional clutch mechanism, either clutch plates or a frustoconical engagement structure, as well as a specific biasing mechanism to apply load between side gears connected to the output shafts and the differential casing connected to the input shaft.

In a purely mechanical variant thereof, the LSD's clutch mechanism may use a spring to initially preload the side gears so that a minimum torque can always be applied to the wheel having traction. However, such preloaded clutches are always engaged and thus are susceptible to wear thus causing undesired repair and replacements costs.

Other LSDs use mechanical or hydraulic arrangements to apply locking torque to the side gears on basis of a sensed difference in rotational speed or torque between the two output shafts - called "speed sensitive differentials" or "torque sensitive differentials", which, however, are complicated in structure, and due to their passive nature may not be controlled.

In order to overcome such a drawback, in recent years, electronically controlled LSDs have been developed that enable control of actuation in response to a (selectable) predetermined differentiation condition of the differential using an electronically controlled clutch. In other words, the electronically controlled LSD is a differential where the differentiating speed can be restricted using a controllable clutch that can be actuated electronically using an actuating means, such as an electromagnet, so that in contrast to passive LSDs it becomes possible to control the LSD independently of the differentiating torque or speed of the output shafts. The controllable variable in the electronically controlled LSD is the torque which can be transferred between left and right wheels by locking or unlocking the clutch.

Conventionally, control of electronically controllable LSDs is performed in a closed loop control system for instance using a proportional-integral-derivative (PID)-controller, which is a common feedback loop component in industrial control systems to control any measurable process variable which can be affected by manipulating any other process variable.

In principal, in a typical PID-controller, an error signal, conventionally defined to be the calculated difference between a reference value and a measured value of the process value under consideration, is used for calculating a control signal to be supplied to an actuating means that brings the measured process value back to its desired reference value.

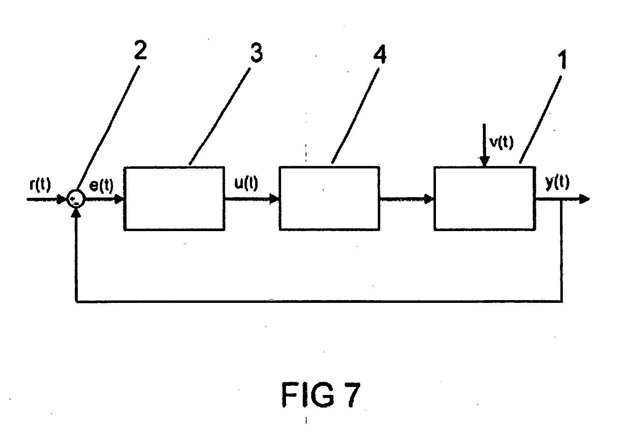

Reference is now made to FIG. 7 illustrating the principal layout of a conventional closed loop control system based on a PID-controller, which, for instance, can be used to control an LSD. Accordingly, the control system includes a system 1 to be electronically controlled such as an LSD, a differentiating means 2 being provided with the measured value y (t) of any measurable system variable and also with a reference value r(t) that is preset or determined to calculate an error signal e(t) thereof as-above described, a controller 3 for calculating an output (control) signal u (t) on basis of the input error signal e(t), and an actuator 4 for acting on the system 1 to bring the measured system value back to its desired reference value.

More specifically, in such control system, in the PID-controller, correction of the process value is calculated from the error signal in three ways: In order to handle the present, the error is multiplied by a negative constant and added to the controlled quantity. In order to handle the past, the error is integrated over a period of time, multiplied by a negative constant and then added to the controlled quantity. And, in order to handle the future, the first derivative of the error over time is calculated, multiplied by another negative constant and then added to the controlled quantity.

Accordingly, the PID-controller's output u(t) used as control signal for the actuating means may be written as sum of three contributing parts:

$$u(t) = P_{contrib} + I_{contrib} + D_{contrib}$$

where $P_{contrib}$, $I_{contrib}$ and $D_{contrib}$ are the feedback contributions from the P-controller, 1-controller, and D-controller, as defined below:

$$P_{contrib} = K_p e(t)$$

$$I_{contrib} = K_i \int_{-\infty}^{t} e(t)dt$$

$$D_{contrib} = K_d \frac{de(t)}{dt}$$

with $K_p$, $K_i$ and $K_d$ being proportional constants: proportional gain, integral gain and derivative gain, respectively.

Electronically controlled LSDs embedded in such closed loop control systems based on PID-controllers are well-known to those of skill in the art, and, therefore, need not be further detailed here.

In modern vehicles, electronically controlled LSDs may advantageously be used for yaw rate control of the vehicle to stabilize the vehicle particularly when making a turn. In other words, controlled torque transfer by locking or unlocking the clutch can be used to decrease or increase the yaw rate in specific situations to stabilize the vehicle.

For instance, when releasing throttle in a turn, the vehicle receives an increase in yaw rate which is desirable to eliminate to thus make the vehicle maintain the path. When releasing the throttle, the engine torque drops and becomes negative, which results in a deceleration of the vehicle. When this happens, due to a longitudinal load transfer associated therewith, the load on the front axle will increase while the load on the rear axle decreases. If no change is made in the steering wheel angle the car will describe a tighter turn having a reduced radius. The desired behavior for the vehicle when performing the throttle off, however, is to maintain the current curve radius while decelerating.

In order to maintain the curve radius when the velocity is reduced, the yaw rate has to be reduced, too.

The document GB 2 406 178 A discloses further a method of controlling a clutch based differential of a vehicle in a PID-controller based closed loop control system, said control system including a PID-controller for controlling said differential to control the vehicle's yaw rate, wherein said PID-controller is adapted to create a control signal based on yaw rate error as calculated on basis of reference and measured yaw rates, said control signal being supplied to an actuating means operatively coupled to said differential for actuating thereon based on said control signal; said system further including a reference yaw rate determination logic for determining a reference yaw rate and an logic for creating an yaw rate error to be provided to said PID-controller.

Hence, an object for the control strategy is to eliminate the initial yaw rate deviation and to reduce the yaw rate proportional to the vehicle velocity to maintain the path.

This object is attained by the method claim 1.

## SUMMARY OF THE INVENTION

In light of the above, the present invention discloses a method of controlling an electronically controlled limited slip differential (LSD) in a closed loop control system based on a PID-controller in a vehicle in order to control the vehicle's yaw rate.

The control system includes an electronically controllable limited slip differential that allows a pair of output shafts operatively coupled to an input shaft to rotate at different speeds, thereby allowing the wheel associated with each output shaft to maintain traction with the road while the vehicle is turning. Actuation of the LSD by means of an actuating means is made in response to a (selectable) predetermined differentiation condition of the LSD using an electronically controllable clutch actuated by the actuating means.

The control system for controlling the LSD in order to control the vehicle's yaw rate is based on a PID-controller that creates a control signal on basis of a calculated yaw rate error to be supplied to the actuating means for controlling actuation thereof. Conventionally, the yaw rate error is defined to be the difference of a reference yaw rate and a measured yaw rate. The reference yaw rate may be pre-set or else is calculated using specific reference yaw rate determination logic, while the measured yaw rate is measured using specific yaw rate sensing means. The PID-controller's output signal is output to the actuating means for actuating thereof in accordance therewith with the actuating means being operatively coupled to the LSD for control thereof.

The control system further comprises a plurality of dedicated logic devices, which are:

- a reference yaw rate determination logic for performing determination of reference yaw rate based on a variety of input signals, and

- an adaptation logic for providing an adapted yaw rate error signal to the PID-controller, with the adaptation logic being interconnected between said reference yaw rate determination logic and the PID-controller.

The adaptation logic on its input side is provided with the reference yaw rate and a measured yaw rate as measured by a yaw rate sensing means for calculating an adapted yaw rate error to be input to the PID-controller.

The method of controlling an electronically controlled limited slip differential in a closed loop control system based on a PID-controller comprises, performed by the adaptation logic, adaptation of the yaw rate error in a situation when the vehicle makes a turn in response to a throttle off situation. The adaptation of the yaw rate error comprises the steps of:

Dividing the measured yaw rate by the reference yaw rate at initiation of adaptation, in case the measured yaw rate is smaller than the reference yaw rate, to calculate a yaw rate ratio. Initiation of adaptation of the yaw rate error may for instance be effected receiving a throttle off signal as sensed by a dedicated throttle sensing means for sensing a throttle position of the vehicle, or, alternatively, by sensing the engine torque using an engine torque sensing means.

Then, the yaw rate ratio as calculated at initiation of the adaptation is multiplied with the reference yaw rate during the throttle off condition.

In case of a throttle on condition, i.e. when the throttle off condition is terminated, as for instance sensed by the throttle position sensing means, which is communicated to the adaptation logic, the yaw rate ratio is set to 1 again, so that an yaw rate error as conventionally determined to be a difference of the reference yaw rate and the measured yaw rate is input to the PID-controller.

Upon doing so, a faster response from the limited slip differential may be obtained to result in a more stable vehicle that will remain with the same path releasing throttle in a turn. Adaptation of the error rate signal can be used to eliminate small fluctuations, thereby improving the vehicle behaviour during throttle off.

Other and further objects, features and advantages of the invention will appear more fully from the following description.

## BRIEF DESCRIPTION OF THE DRAWINGS

The accompanying drawings, which are incorporated in and constitute a part of the specification, illustrate embodiments of the invention, and together with the general description given above and the detailed description given below, serve to explain the principles of the invention.

FIG. 1 is a diagram depicting an exemplary conceptual layout of the control strategy for the electronically controlled LSD in a closed loop control system on basis of a PID-controller;

FIG. 2 is a diagram depicting yaw rate [deg/sec] versus time [sec] in a case when the driver making a turn holds the steering wheel in a same angle and releases the throttle after an time period of 3 seconds without engagement of the differential clutch;

FIG. 3 is a diagram depicting adaptation of the measured yaw rate [deg/sec] and the reference yaw rate [deg/sec] versus time [sec] during throttle off in making a turn;

FIG. 4 is a diagram illustrating the measured yaw rate [deg/sec] versus time [sec] during throttle off in making a turn with the LSD being open (dashed line) and being locked (solid line) adapting the yaw rate error;

FIG. 5 is a diagram depicting an exemplary flux diagram of a method to decide whether the wheel speed difference of left and right wheels can be used to determine into which direction torque transfer is possible;

FIG. 6 is a diagram depicting as an example vehicle velocity [km/h] over time [sec] of a vehicle driving on a split-$\mu$ surface, in case of an electronically controlled LSD using split-$\mu$ feed forward logic and in case of an open differential;

FIG. 7 illustrates the principal layout of a conventional closed loop control system based on a PID-controller.

## DETAILED DESCRIPTION OF THE INVENTION

Embodiments of the present invention will be described in detail below with reference to the accompanying drawings, where like designations denote like or similar elements.

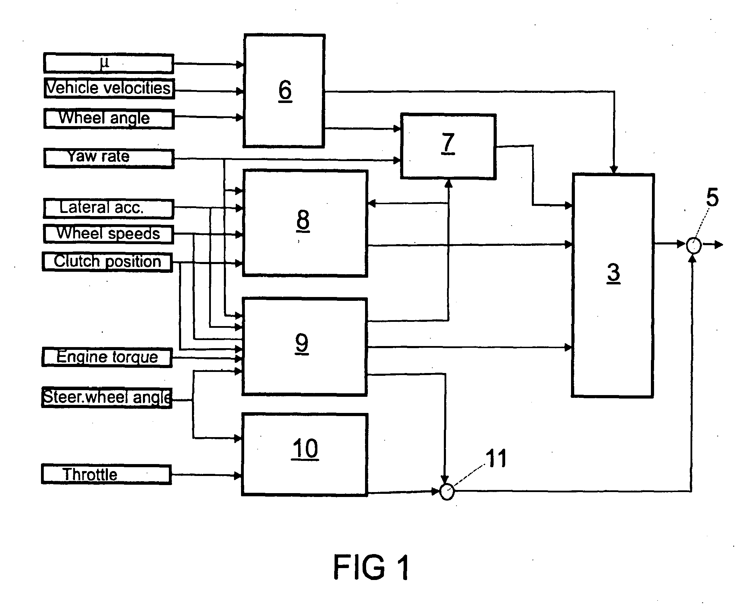

First, reference is made to FIG. 1 which depicts an exemplary conceptual layout of the control strategy for the electronically controlled LSD in a closed loop control system on basis of a PID-controller.

Accordingly, the closed loop control system is based on a PID-controller 3 with variable parameters, the output signal (c) of which being a control signal supplied to an actuating means (not shown in Fig. 1) acting on the electronically controllable LSD (not shown in Fig. 1) on basis of the control signal input. The output signal of the PID-controller 3 is used to control on the yaw rate error of the vehicle.

In the control system, on the upstream side of the PID-controller 3, a plurality of logic devices or components ("logic") are arranged, that are arranged to update parameters for usage by the PID-controller 3 to give satisfying control during different driving conditions.

The logic components include a bicycle reference model logic 6 adapted for creating and outputting a reference yaw rate signal, an adaptation logic 7 adapted for adapting and outputting a yaw rate error signal, an ability signal logic 8 adapted for creating and outputting an ability signal to be multiplied with the yaw rate error signal, a scenario identification logic 9 adapted for creating, changing and outputting parameters of the PID-controller, and a split-$\mu$ feed forward logic 10 adapted for creating and outputting a control signal to be added with the PID-controller output signal in a split-$\mu$ condition.

Outputs of the bicycle reference model logic 6, the adaptation logic 7, the ability signal logic 8 and the scenario identification logic 9 respectively are connected with the input side of the PID-controller 3, so that output signals of these logic devices can directly be supplied to the PID-controller 3. Otherwise output of the split-$\mu$ feed forward logic 10 is connected to an adder means 5, so that an output signal of the split-$\mu$ feed forward logic 10 and an output signal of the PID-controller 3 can be added.

The logic components are provided with a plurality of input signals as is explicitly given on the their left sides. These input signals will be measured by dedicated sensing means or, alternatively, will be estimated.

Accordingly, the bicycle reference model logic 6 is provided with the road friction coefficient $\mu$, which coefficient typically is estimated, the vehicle velocities, that is to say signals describing the longitudinal and lateral velocities of the vehicle, which typically are measured using longitudinal velocity and lateral velocity sensing means, and the wheel angles, which typically are measured using wheel angle sensing means. The bicycle reference model logic 6 outputs a yaw rate reference signal based on its input values that is supplied to the adaptation logic 7.

The adaptation logic 7 on its input side is provided with a reference yaw rate being an output signal of the bicycle reference model logic 6. It further is provided with a measured yaw rate signal that is measured using a yaw rate signal sensing means. On its output side, the adaptation logic 7 outputs a yaw rate error signal supplied to the PID-controller 3 for further processing to create a control signal for controlling the LSD.

The ability signal logic 8 on its input side is provided with the measured yaw rate, a lateral acceleration, which is measured using a lateral acceleration sensing means, the wheel speeds, that is to say signals of the wheel speeds which are measured using wheel speed sensing means, and a clutch position, which is measured using a clutch position sensing means. The output signal of the ability signal logic 8 is supplied to the PID-controller 3 to be multiplied with the yaw rate error signal.

The scenario identification logic 9, on its input side, is provided with the measured yaw rate, the measured lateral acceleration, the wheel speeds, the clutch position, an engine torque, which is measured using an engine torque sensing means, and a steering wheel angle, which is sensed using a steering wheel angle sensing means. Output signals of the scenario identification logic 9, inter alia, are supplied to the PID-controller 3 and the adaptation logic 7.

The split-$\mu$ feed forward logic 10, on its input side, is provided with the steering wheel angle and a throttle signal, which is measured using a throttle sensing means. An output signal of the split-$\mu$ feed forward logic 10 is supplied to a processing means 11 which is also provided with an output signal of the scenario identification logic 9 in order to calculate a control signal supplied to the adder means 5. The adder means 5 is further provided with an output signal of the PID-controller in order to calculate a control signal supplied to the actuating means for controlling the LSD.

All sensing means as above-cited and used for sensing of input signals supplied to the logic devices as such are well-known to those of skill in the art, and, hence, need not be further detailed here.

In the following, adaptation of the yaw rate error when releasing throttle in a turn is explained.

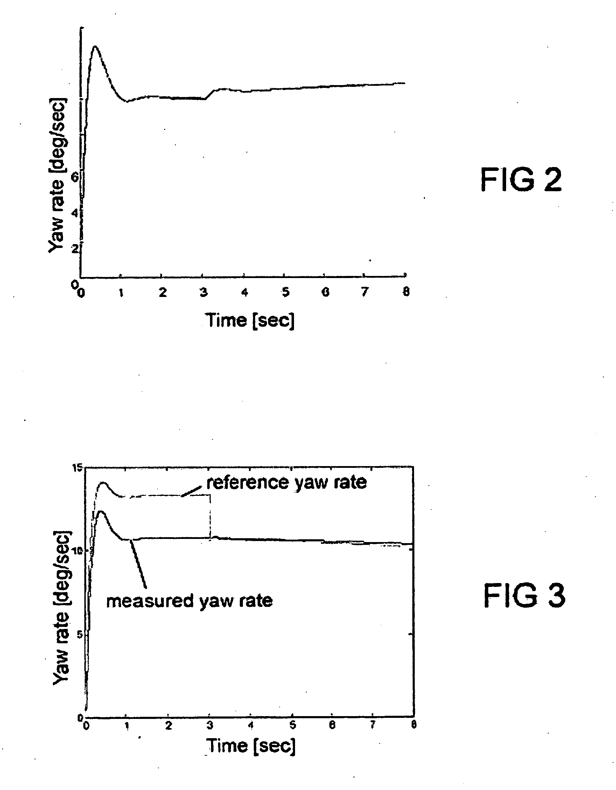

Reference is now made to Fig. 2 which depicts yaw rate [deg/sec] versus time [sec] in a case when the driver making a turn holds the steering wheel in a same angle and releases the throttle after an time period of 3 seconds. As can be seen from Fig. 2, without engaging the differential, the vehicle experiences a slight increase in the yaw rate due to the release of the throttle.

Conventionally, if there is a big difference between the reference yaw rate and the actual yaw rate as measured by the yaw rate sensing means, the PID-controller will not do anything to eliminate the yaw rate deviation due to throttle release because the measured yaw rate signal will not be big enough to cross the reference signal and therefore the differential will remain open. In order to eliminate the yaw rate deviation due to throttle off in a turn, the LSD is to be engaged. However, by locking the LSD completely, the damping effect on the yaw rate will be too large and the vehicle will instead receive an undesirable decrease of the yaw rate making the vehicle under-steered.

Accordingly, in order to determine an appropriate amount of locking of the LSD, instead of trying to control the vehicle's yaw rate to follow the reference yaw rate, the yaw rate control makes the vehicle's yaw rate to follow the deviation of the reference yaw rate. This makes the response fast and accurate.

In order to follow the deviation of the reference yaw rate, according to the present invention, the following adaptation strategy is applied: When throttle off is identified using a throttle position sensing means, a signal to the adaptation logic 7 is given that initializes performance of the yaw rate error adaptation. If the measured yaw rate is smaller than the reference yaw rate, in the adaptation logic 7, adaptation of the yaw rate error takes place. To this end, the measured yaw rate is divided with the reference yaw rate as given at start of the adaptation and such ratio is saved in a memory included in the adaptation logic 7. While the vehicle is maintained in a throttle off condition the saved ratio is used to be multiplied with the reference yaw rate to calculate an adapted yaw rate error signal supplied to the PID-controller 3. Then, control is made based on that adapted yaw rate error signal.

Otherwise, in case the vehicle leaves the throttle off condition, that is to say throttle on is identified by the throttle position sensing means and is communicated to the adaptation logic 7, the yaw rate ratio is set to 1 again, so that control of the LSD may be based on the yaw rate error as given by the difference between the reference yaw rate and the measured yaw rate as is conventionally practiced.

Reference is now made to FIG. 3 diagrammatically depicting adaptation of the measured yaw rate [deg/sec] (solid line) and the reference yaw rate [deg/sec] (dashed line) versus time [sec] during throttle off in making a turn. As can be seen from FIG. 3, in a case when the driver makes a turn holding the steering wheel in a same angle and throttle is released after a time period of 3 seconds, due to adaptation of the yaw rate error signal as above-described and performed in the adaptation logic 7, a significant decrease of the deviation of the yaw rate due to throttle off when making a turn can be observed. As can further be taken from FIG. 3, the measured yaw rate and the reference yaw rate align with each other after adaptation of the yaw rate error signal.

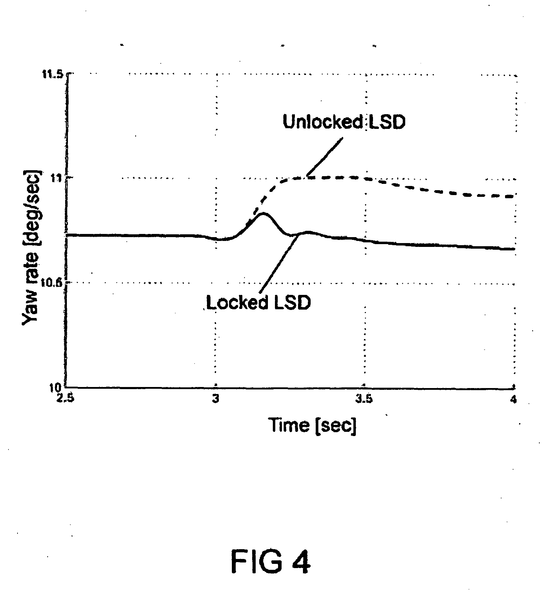

Reference is now made to FIG. 4 illustrating the measured yaw rate [deg/sec] versus time [sec] during throttle off in making a turn with the LSD being open (dashed line) and being locked (solid line) as controlled under performing adaptation of the yaw rate error.

FIG. 4 especially compares to a case, where the initial speed is set to 70 km/h and the driver holds a steering wheel angle of 50 degrees. No control takes place before the throttle off occurs after an elapsed time of 3 sec. When throttle off occurs, the control strategy identifies that by engaging the LSD, it will create the desired behavior. As can be taken from FIG. 4, appropriately locking the LSD (solid line), based on adaptation of the yaw rate error as above-described, deviation of the yaw rate due to throttle off is significantly lowered compared to the open LSD (dashed line).

The bicycle reference model logic 6 uses the well-known bicycle model to calculate the reference yaw rate. In the bicycle model, the vehicle is represented as bicycle, where the two front wheels as well as the two rear wheels may be replaced with one wheel with the cornering being equivalent to both wheels of a same axle. However, using the bicycle model is just an example, and, hence, instead of using the bicycle model, any other reference model may also be used to calculate the reference yaw rate. The bicycle reference model logic 6 also calculates the desired vehicle slip and compares it to the measured vehicle slip. A comparison between the measured vehicle slip and the calculated vehicle slip is supplied to the PID-controller 3 to influence the gains (parameters) in the PID-controller 3.

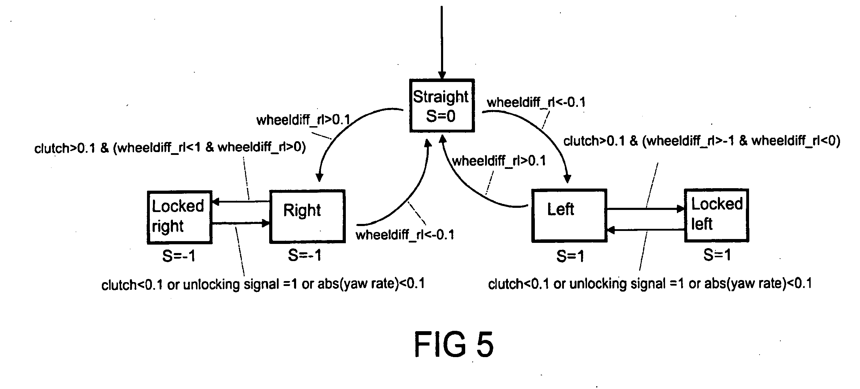

Reference is now made to FIG. 5 depicting an exemplary flux diagram of a method performed by the ability signal logic 8 to decide whether the wheel speed difference of left and right wheels coupled by the LSD can be used to determine into which direction torque transfer is possible.

Accordingly, the control system may take different "states" that are associated with specific values of the ability signal (s), which are a "straight" state, "right" and "left" states and "locked right" and "locked left" states, respectively.

The entrance state for the ability signal control is the straight state that is associated with a numeric value of the ability signal s=0. In the straight state, no torque transfer is possible, since left and right wheels turn with a same rotational speed.

If one wheel spins faster, depending on the case if this wheel is the right or left wheel, the ability signal s changes from 0 to -1 in the "right" state and from 0 to 1 in the "left" state. In the right state, the right wheel turns faster than the left wheel, which in FIG. 5, as an example, turns 10% faster than the left wheel. In a same way, in the left state, the left wheel turns faster than the right wheel, which in FIG. 5, as an example, turns 10% faster than the right wheel.

In the left or right states, the control system can decide on a wheel speed difference of the wheels coupled by the LSD whether a lock or unlock of the LSD clutch would cause the yaw rate to increase or decrease.

Accordingly, in the control system, the ability signal is used together with the sign of the yaw rate error to determine whether locking will result in an increase or decrease of the yaw rate error. If the ability signal multiplied with the yaw rate error is positive, then the yaw rate error can be decreased by locking the LSD clutch. Otherwise, if the ability signal multiplied with the yaw rate error is negative, then the error cannot be decreased by locking the LSD clutch.

Again referring to Fig. 5, the basic principle of ability signal control is as follows:

For the following considerations it is defined that, for example, a left turn yields a positive yaw rate while a right turn yields a negative yaw rate, and, that the wheel speed difference, for example, is calculated to be the wheel speed of right wheel minus the wheel speed of left wheel (wheeldiff_rl) .

The default state is "straight". When the vehicle enters a right turn as seen from above, the left wheel turns faster than the right wheel yielding to a negative value of the wheel speed difference (wheeldiff_rl < 0) . The state will then change to "left" and the ability signal is set to +1.

In case that the absolute value of the reference yaw rate is bigger than the absolute value of the measured yaw rate, the yaw rate error becomes negative (considering above definition of the sign of the yaw rate). Then, in order to reduce the yaw rate error, the measured yaw rate must become more negative than what it is, in other words the absolute value of the yaw rate must increase. However, since the outside wheel spins faster than the inner wheel, it is only possible to transfer torque from the outside left wheel to the inside right wheel. According to ability signal control, the yaw rate error is multiplied with the ability signal (+1) to check if it is possible to reduce the yaw rate error. Since the yaw rate error is negative and the ability signal is +1, the product thereof is negative which means that during the present driving condition it is not possible the reduce the yaw rate error by locking the differential. It rather is true, that the yaw rate error would be increased in case the clutch would be engaged.

Otherwise, if the speed of the vehicle is increased during making the right turn, the inner right wheel may loose traction and spin faster than the outer wheel (wheeldiff_rl > 0) and the state will change from "left" to "straight" to "right". When the state has changed to "right", the ability signal will change sign to -1. In that case, the yaw rate error is still negative, but when it is multiplied with the ability signal, the product will become positive. Therefore, the LSD will be engaged to decrease (or even eliminate) the yaw rate error as desired.

Alternatively, when the vehicle makes a left turn, the right wheel turns faster than the left wheel yielding to a positive value of the wheel speed difference (wheeldiff_rl > 0) . The state will then change to "right" and the ability signal is set to -1.

In case that the absolute value of the reference yaw rate is bigger than the absolute value of the measured yaw rate, the yaw rate error becomes positive (considering above definition of the sign of the yaw rate). Then, in order to reduce the yaw rate error, the measured yaw rate must become more positive than what it is. However, since the outside right wheel spins faster than the inner left wheel, it is only possible to transfer torque from the inner left wheel to the outside right wheel. According to ability signal control, the yaw rate error is multiplied with the ability signal (-1) to check if it is possible to reduce the yaw rate error. Since the yaw rate error is positive and the ability signal is -1, the product thereof is negative which means that during the present driving condition it is not possible the reduce the yaw rate error by locking the differential. It rather is true, that the yaw rate error would be increased in case the clutch would be engaged.

Otherwise, if the speed of the vehicle is increased during making the left turn, the inner left wheel may loose traction and spin faster than the outer wheel (wheeldiff_rl < 0) and the state will change from "right" to "straight" to "left". When the state has changed to "left", the ability signal will change sign to +1. In that case, the yaw rate error is still positive, and when it is multiplied with the ability signal, the product will remain positive. Therefore, the LSD will be engaged to decrease (or even eliminate) the yaw rate error as desired.

Now, in case that the differential clutch is at least partially engaged, so that a clutch position signal identifying the clutch locking state and ranging from 0 to 1 to identify a fully open and a fully locked state, respectively, for instance is sensed to be over 0.1, meaning that the clutch is more than 10% locked, and in case that the wheel speed difference is between 0 and 1, the "right" state will change to the "locked right" state, and, in case that the wheel rotational speed difference is between 0 and -1, the "left" state will change to the "locked left" state.

When the state is one of the locked states, the output ability signal is the same as in the previous states. However, when in a locked state, the ability signal (s) no longer depends on the rotational speeds of the wheels, but will instead wait for one of three criteria to be satisfied until the wheel speed difference of the left and right wheels can be used to determine direction of possible torque transfer. (Since there is always a rotational speed difference of left and right wheels present due to mechanical torsion in the output axles, this small wheel speed difference might eventually also be used to decide the possible torque transfer direction when the following criteria are fulfilled.)

Accordingly, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if it is sensed that a clutch position signal identifying the locking state of the LSD clutch is below 0.1 meaning that the clutch is less than 10% locked, so that the clutch is very close to fully unlocked. Unlocking the clutch can for instance result from the control strategy controlling on the yaw rate. To this end, the ability signal logic is connected with a dedicated clutch position sensing means for sensing of the locking state of the LSD clutch.

Alternatively, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if a clutch unlocking control signal instructing at least partial unlocking of the clutch is provided to the LSD meaning that the clutch goes from a locked stated to a less locked or even unlocked state. The signal itself is only a flag.

More specifically, such control signal for instance depends on the lateral acceleration of the vehicle and the current road friction coefficient $\mu$. If the lateral acceleration is below a predetermined threshold value, multiplied with $\mu$, and the derivative thereof is negative, above unlocking signal will be output to the actuating means to unlock the differential clutch. Alternatively, if a throttle off signal is recognized, this will also output an unlocking signal to the actuator to unlock the differential clutch.

Further alternatively, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if the measured yaw rate of the vehicle changes its sign.

If at least one of above three criteria according to the three aspects of the invention is fulfilled, then the locked state is changed from "locked right" to "right" or from "locked left" to "left" with the result that the rotational speeds of the right and left wheels again may again be used to determine direction into which torque transfer is possible, i.e. the differential's ability in yaw rate change.

Reference is now made to the split-μ feed forward logic 10 connected to the adder means 5 for supplying an output signal to the adder means 5 to be added to the output (control) signal of the PID-controller 3.

As explained in the introductory portion, in case one of the driving wheels is located on ground with higher road friction coefficient μ than the other wheel, if the differential is open, the wheel with lower road friction coefficient μ will start to spin if too much torque is applied. When this happens, the other wheel can only receive as much torque as the wheel with lower road friction coefficient μ can put into tractive force. If the road friction coefficient μ is very low, the tractive force is also very low, which means that the total longitudinal force of the vehicle is also low that will cause the acceleration to be low, resulting in that the vehicle will almost not move forward or move very slowly. Such a situation where one wheel experiences more traction than the other is conventionally called a "split-μ condition".

Engaging the differential clutch under the split-μ condition will bring down the wheel speed difference which occurs due to the low-μ wheel spin increase. This also transfers torque via the clutch from the side with the low μ to the other. This moment, however, can, if the differential is locked and a high engine torque is requested, cause a yaw rate that will be too high for the driver to handle. Otherwise, under split-μ condition the driver's steering wheel input need not be interpreted as desire to turn but as a desire to stop the car from yawing about its centre of gravity. However, when the vehicle stands still, there will be no yaw rate error, so when the driver applies the throttle the differential will not lock if the only control is on the yaw rate error.

In order to overcome such drawback, according to the present invention, the split-μ feed forward logic 10 is adapted to transfer an appropriate amount of torque under split-μ condition.

Accordingly, locking of the LSD is dependent on the throttle input as well as on the steering wheel angle from the driver. More specifically, the driver's throttle input as measured by a throttle sensing means is used to make a feed forward locking of the differential. In the adder means 5, the output signal of the split-μ feed forward logic 10 is added to the control signal created by the PID-controller 3 to create an improved control signal for supplying to the actuator to control the LSD.

Hence, the throttle input is interpreted as an acceleration request, with the result that if the throttle is pressed down rapidly a high acceleration is desired. The differential is locked according to the throttle request. Additionally, using a rate limiter, the steering wheel angle or the steering wheel turning rate is also taken into account. If the driver steers "actively", this is interpreted as a more active driving and therefore the differential is locked faster, thereby allowing a more responsive vehicle. The vehicle will gain better traction because of the engagement of the differential.

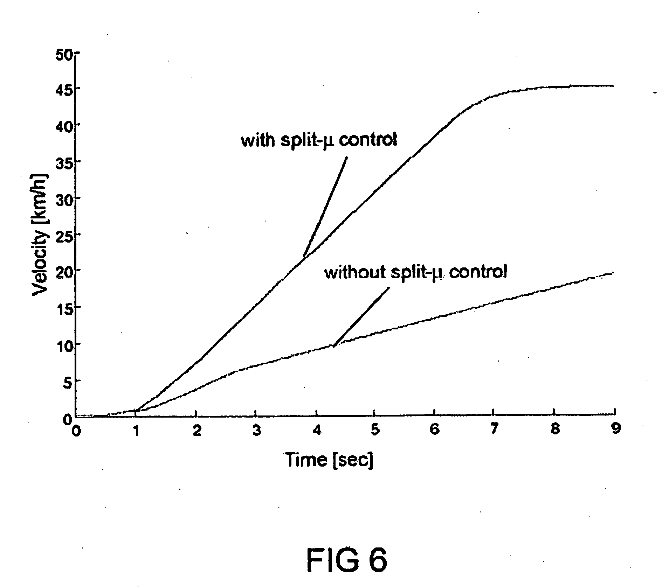

Reference is now made to FIG. 6 depicting as an example the vehicle velocity [km/h] over time [sec] of a vehicle driving on a split-μ surface. Accordingly, as can be taken from FIG. 6, upper curve, in case of an electronically controlled LSD using split-μ feed forward logic 10 for locking the LSD, the vehicle velocity is increased over the case of an open differential, lower curve.

Now, reference is made to the scenario identification logic 9, that on its input side, is provided with the measured yaw rate, the measured lateral acceleration, the wheel speeds, the clutch position, the engine torque and the steering wheel angle. Output signals of the scenario identification logic 9 are supplied to the PID-controller 3, the adaptation logic 7 and the processing means 11. The scenario identification logic 9 determines the current driving scenarios of the vehicle. The outputs from the scenario identification logic 9 are the current driving states and the parameters of the PID-controller, $K_p$, $K_i$ and $K_d$, which correspond to the wanted control behavior of the control system. The parameters will be changed when the driving scenario changes.

Obviously many modifications and variations of the present invention are possible in light of the above description. It is therefore to be understood, that within the scope of appended claims, the invention may be practiced otherwise than as specifically devised.

While the invention has been described in detail and with reference to specific embodiments thereof, it will be apparent to one of skill in the art that various changes and modifications can be made therein without departing from the scope thereof. Accordingly, it is intended that the present invention covers the modifications and variations of this invention provided they come within the scope of the appended claims and their equivalents.

List of reference signs

1    System

2     Error signal forming means
3     PID-controller
4     Actuator
5     Adder means
6     Bicycle reference model logic
7     Adaptation logic
8     Ability signal logic
9     Scenario identification logic
10    Split-μ feed forward logic
11    Processing means

**Claims**

1. A method of controlling a clutch based limited slip differential (LSD) of a vehicle in a PID-controller based closed loop control system, said control system including a PID-controller (3) for controlling said LSD to control the vehicle's yaw rate, said PID-controller being adapted to create a control signal based on yaw rate error as calculated on basis of reference and measured yaw rates, said control signal being supplied to an actuating means operatively coupled to said LSD for actuating thereon based on said control signal; said system further including a reference yaw rate determination logic (6) for determining a reference yaw rate and an adaptation logic (7) for creating an adapted yaw rate error to be provided to said PID-controller, said adaptation logic being interconnected between said reference yaw rate determination logic and said PID-controller and being provided with said reference yaw rate and a measured yaw rate as measured by a yaw rate sensing means; wherein said method comprising a step of adapting said yaw rate error when releasing throttle in making a turn performed by said adaptation logic, which adaptation of the yaw rate error comprises the steps of:

    - initiating of adaptation of the yaw rate error;
    - dividing of the measured yaw rate by the reference yaw rate to calculate a yaw rate ratio at initiation of the adaptation; and
    - multiplying said yaw rate ratio with the reference yaw rate during said throttle off condition to create an adapted error rate signal to be supplied to said PID-controller.

2. The method of claim 1, in which said reference yaw rate is determined using a bicycle model.

3. The method of claims 1 or 2, in which said control system further comprises an ability signal logic (8) being provided with wheel speeds of the wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partly engaged state of the LSD, whether said wheel speed difference may be used to determine possible torque transfer, with the wheel speed difference being used if a clutch position signal as sensed by a clutch position sensing means connected to said ability logic is sensed to be below a predetermined threshold value.

4. The method of claims 1 or 2, in which said control system further comprises an ability signal logic (8) being provided with wheel speeds of the wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partly engaged state of the LSD, whether said wheel speed difference may be used to determine possible torque transfer, with the wheel speed difference being used if a clutch unlocking control signal instructing at least partial unlocking the LSD clutch is supplied to the actuating means.

5. The method of claim 4, in which said clutch unlocking control signal is supplied to said actuating means in case a lateral acceleration of the vehicle as measured by a lateral acceleration sensing means connected to said ability signal logic goes below a predetermined threshold value, with the further condition that derivative thereof changes its sign.

6. The method of claim 4, in which said clutch unlocking control signal is supplied to said actuating means in case of throttle off communicated to said ability signal logic as sensed by a throttle input sensing means connected to said ability signal logic.

7. The method of claims 1 or 2, in which said control system further comprises an ability signal logic (8) being provided with wheel speeds of the wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partly engaged state of the LSD, whether said wheel speed difference may be used to determine possible torque transfer, with the wheel speed difference being used if said measured yaw rate of the vehicle changes its sign.

8. The method according to any of the preceding claims, in which said control system further comprises a split-μ feed forward logic (10) adapted for outputting a control signal to be added to the control signal of the PID-controller (3), wherein said method of controlling said control system comprises the steps of:

- sensing the driver's throttle input and outputting a split-$\mu$ feed forward logic control signal formed in proportionality to the driver's throttle input;
- adding of the split-$\mu$ feed forward logic control signal to the output signal of the PID-controller to create a control signal for controlling the LSD.

9. The method of claim 8, further comprising a steering wheel angle sensing means for sensing of a wheel angle of the steering wheel, wherein said method comprises the step of sensing a steering wheel angle, and wherein said split-$\mu$ feed forward logic control signal is limited in proportionality to said sensed steering wheel angle.

10. The method of claim 8, further comprising a steering wheel turning rate sensing means for sensing of a turning rate of the steering wheel, wherein said method comprises the step of sensing a steering wheel turning rate, and wherein said split-$\mu$ feed forward logic control signal is limited in proportionality to said sensed steering wheel turning rate.

**Patentansprüche**

1. Verfahren zur Steuerung eines kupplungsbasierten schlupfbegrenzten Differentials (LSD, limited slip differential) eines Fahrzeugs in einem PID-Regler-basierten geschlossenen Regelkreis, wobei dieser Regelkreis einen PID-Regler (3) für die Regelung des LSD umfasst, damit dieses die Gierrate des Fahrzeugs steuert, wobei dieser PID-Regler für die Erzeugung eines Steuersignals eingerichtet ist, das auf dem Gierraten-Fehler beruht, wie er auf der Grundlage von Referenz- und gemessenen Gierraten berechnet wird, und wobei das Steuersignal an eine Betätigungseinrichtung geliefert wird, die mit dem LSD wirkverbunden ist, um dieses auf der Grundlage des Steuersignals zu betätigen, wobei das System ferner eine Referenzgierraten-Ermittlungslogik (6) für die Ermittlung einer Referenzgierrate und eine Anpassungslogik (7) zur Erzeugung eines an den PID-Regler zu liefernden angepassten Gierraten-Fehlers umfasst, wobei die Anpassungslogik zwischen die Referenzgierraten-Ermittlungslogik und den PID-Regler geschaltet ist und die Referenzgierrate und eine gemessene Gierrate - gemessen durch eine Gierraten-Sensoreinrichtung - zur Verfügung gestellt bekommt, wobei das Verfahren einen Schritt zur Anpassung des Gierraten-Fehlers umfasst, wenn das Gas beim Durchfahren einer von der Anpassungslogik ausgeführten Kurve weggenommen wird, wobei die Anpassung des Gierraten-Fehlers folgende Schritte umfasst:

- Initiieren der Anpassung des Gierraten-Fehlers;
- Dividieren der gemessenen Gierrate durch die Referenzgierrate, um ein Gierraten-Verhältnis bei Initiieren der Anpassung zu berechnen, und
- Multiplizieren des Gierraten-Verhältnisses mit der Referenzgierrate während des Gas-Wegnehmens, um ein angepasstes Fehlerratensignal zur Lieferung an den PID-Regler zu erhalten.

2. Verfahren nach Anspruch 1, wobei die Referenzgierrate unter Verwendung eines Fahrradmodells (bicycle model) ermittelt wird.

3. Verfahren nach den Ansprüchen 1 oder 2, wobei der Regelkreis ferner eine Befähigungssignallogik (8) umfasst, der die Radgeschwindigkeiten der durch das LSD verbundenen Räder zur Verfügung gestellt werden und die dafür eingerichtet ist, auf der Grundlage einer Radgeschwindigkeitsdifferenz ein Befähigungssignal zu erzeugen, wobei die Befähigungssignallogik mit dem PID-Regler verbunden ist, um dem PID-Regler das Befähigungssignal zu liefern, um es mit dem Gierraten-Fehler zu multiplizieren, wobei dieses Verfahren einen Schritt umfasst, in einem zumindest teilweise eingreifenden Zustand des LSD zu entascheiden, ob die Radgeschwindigkeitsdifferenz für die Ermittlung eines möglichen Drehmoment-Transfers genutzt werden kann, wobei die Radgeschwindigkeitsdifferenz verwendet wird, wenn ein Kupplungspositionssignal - erfasst durch eine mit der Befähigungslogik verbundene Kupplungspositions-Sensoreinrichtung - als unterhalb eines vorgegebenen Schwellenwerts liegend erfasst wird.

4. Verfahren nach den Ansprüchen 1 oder 2, wobei der Regelkreis ferner eine Befähigungssignallogik (8) umfasst, der die Radgeschwindigkeiten der durch das LSD verbundenen Räder zur Verfügung gestellt werden und die dafür eingerichtet ist, auf der Grundlage einer Radgeschwindigkeitsdifferenz ein Befähigungssignal zu erzeugen, wobei die Befähigungssignallogik mit dem PID-Regler verbunden ist, um das Befähigungssignal an den PID-Controller zu liefern, um es mit dem Gierraten-Fehler zu multiplizieren, wobei dieses Verfahren einen Schritt umfasst, in einem zumindest teilweise eingreifenden Zustand des LSD zu entscheiden, ob die Radgeschwindigkeitsdifferenz für die Ermittlung eines möglichen Drehmoment-Transfers genutzt werden kann, wobei die Radgeschwindigkeitsdifferenz verwendet wird, wenn ein Kupplungs-Auskupplungs-Steuersignal die Anweisung zum zumindest partiellen Auskuppeln der LSD-Kupplung an die Betätigungseinrichtung geliefert wird.

5. Verfahren nach Anspruch 4, wobei das Steuersignal zum Auskuppeln der Kupplung an die Betätigungseinrichtung geliefert wird, falls eine seitliche Beschleunigung des Fahrzeugs - gemessen durch eine Sensoreinrichtung für seitliche Beschleunigung, die mit der Befähigungssignallogik verbunden ist - unter einen vorgegebenen Schwellenwert fällt, mit der weiteren Bedingung, dass sich das Vorzeichen der Ableitung des Schwellenwerts ändert.

6. Verfahren nach Anspruch 4, wobei das Steuersignal zum Auskuppeln der Kupplung an die Betätigungseinrichtung geliefert wird, falls "Gas weggenommen" an die Befähigungssignallogik übermittelt wird - was durch eine mit der Befähigungssignallogik verbundene Drosselklappeneingabe-Sensoreinrichtung erfasst wird.

7. Verfahren nach den Ansprüchen 1 oder 2, wobei der Regelkreis ferner eine Befähigungssignallogik (8) umfasst, der die Radgeschwindigkeiten der durch das LSD verbundenen Räder zur Verfügung gestellt werden und die dafür eingerichtet ist, auf der Grundlage einer Radgeschwindigkeitsdifferenz ein Befähigungssignal zu erzeugen, wobei die Befähigungssignallogik mit dem PID-Regler verbunden ist, um das Befähigungssignal an den PID-Regler zu liefern, um es mit dem Gierraten-Fehler zu multiplizieren, wobei dieses Verfahren einen Schritt umfasst, in einem zumindest teilweise eingreifenden Zustand des LSD zu entscheiden, ob die Radgeschwindigkeitsdifferenz für die Ermittlung eines möglichen Drehmoment-Transfers genutzt werden kann, wobei die Radgeschwindigkeitsdifferenz verwendet wird, wenn sich das Vorzeichen der gemessenen Gierrate des Fahrzeugs ändert.

8. Verfahren nach einem der vorhergehenden Ansprüche, wobei der Regelkreis ferner eine "Split-$\mu$-feed-forward-Logik" (10) umfasst, die dafür eingerichtet ist, ein dem Steuersignal des PID-Reglers (3) hinzuzufügendes Steuersignal auszugeben, wobei dieses Verfahren zur Steuerung des Regelkreises folgende Schritte umfasst:

   - das Erfassen der Drosselklappeneingabe des Fahrers und die Ausgabe eines "Split-$\mu$-feed-forward-Logik"-Steuersignals, das proportional zur Drosselklappeneingabe des Fahrers gebildet wird;
   - das Hinzufügen des "Split-u-feed-forward-Logik"-Steuersignals zu dem Ausgabesignal des PID-Reglers, um ein Steuersignal zur Steuerung des LSD zu erzeugen.

9. Verfahren nach Anspruch 8, ferner eine Steuerradwinkel-Sensoreinrichtung zum Erfassen eines Steuerradwinkels des Steuerrads umfassend, wobei das Verfahren den Schritt des Erfassens eines Steuerradwinkels umfasst, und wobei das Split-$\mu$-feed-forward-Logik"-Steuersignal in seiner Proportionalität zu dem erfassten Steuerradwinkel begrenzt ist.

10. Verfahren nach Anspruch 8, ferner eine Sensoreinrichtung für die Steuerrad-Drehrate umfassend, wobei das Verfahren den Schritt der Erfassung einer Steuerrad-Drehrate umfasst, und wobei das "Split-$\mu$-feed-forward-Logik"-Steuersignal in seiner Proportionalität zu der erfassten Steuerrad-Drehrate begrenzt ist.

## Revendications

1. Une méthode de contrôle de différentiel à glissement limité (DGL) d'un véhicule dans un système à boucle fermée avec contrôleur PID, appelé système de contrôle et comprenant un contrôleur PID (3) destiné à contrôler lesdits DGL chargés de la supervision du taux de mouvements en lacet d'un véhicule, ledit DGL étant adapté de manière à créer un signal de contrôle basé sur les erreurs du taux de mouvement en lacet, ledit contrôleur PID étant adapté de manière à créer un signal de contrôle basé sur les erreurs du taux de mouvement en lacet calculées sur la base des taux de mouvement en lacet de référence et mesurés, ledit signal de contrôle étant fourni à un levier de manoeuvre couplé audit DGL et fonctionnant sur la base dudit signal de contrôle ; ledit système comprenant de plus une détermination logique du taux de mouvement en lacet de référence (6) permettant de déterminer un taux de mouvement en lacet de référence ainsi qu'une adaptation logique (7) permettant d'obtenir un taux d'erreur des mouvements en lacet adapté qui sera transmis audit contrôleur PID, ladite adaptation logique étant interconnectée avec la référence logique de détermination de taux de mouvement en lacet et ledit contrôleur PID, et recevant ledit taux de référence de lacets et une vitesse de lacet mesurée par un ensemble de capteurs dédiés ; au cours de laquelle ladite méthode comprenant une étape d'adaptation audit taux d'erreur de vitesse de lacet durant la relâchement de l'accélérateur lors d'un virage, dont l'adaptation du taux d'erreur de lacet comprend les étapes :

   - d'initiation de l'adaptation du taux d'erreur de lacet,
   - de division de la vitesse de lacet mesurée via la vitesse de lacet de référence afin de calculer un ratio de vitesse de lacet à l'initiation de l'adaptation ; et
   - la multiplication dudit ratio de vitesse de lacet par la vitesse de lacet de référence durant la phase d'arrêt de l'accélération de manière à créer un signal de taux d'erreurs adapté à destination dudit contrôleur PID.

2. La méthode de revendication 1, dans laquelle le dit vitesse de lacet de référence est déterminé via le modèle d'une moto.

3. La méthode de revendications 1 ou 2, dans laquelle ledit système de contrôle comprend également un signal logique (8) apporté par la rotation des roues couplées au DGL et adapté de manière à créer un signal basé sur le différentiel de vitesse des roues, ledit signal logique étant connecté audit contrôleur PID afin de fournir le signal au contrôleur PID, démultiplié avec ledit taux d'erreur de lacets ; dans laquelle ladite méthode comprenant une étape de décision, dans au moins un état partiellement engagé du DGL, ladite différence de vitesse des roues étant utilisée pour déterminer le transfert de couple, cette dernière différence étant elle-même utilisée si un signal d'embrayage enregistré par le capteur de position d'embrayage connecté audit élément logique est compris en dessous des seuils prédéterminés.

4. La méthode des revendications 1 ou 2, dans laquelle ledit système de contrôle comprend également un signal logique d'habilité (8) fourni par la vitesse de rotation des roues couplées audit DGL et adapté à la création d'un signal basé sur la différence de vitesse entre les roues, ledit signal logique étant connecté audit contrôleur DGL afin d'apporter ledit signal d'habilité audit contrôleur PID de manière à multiplier ce dernier avec ledit taux d'erreur de lacets ; dans laquelle ladite méthode comprend une étape de décision, dans au moins un état partiellement engagé du DGL, la différence de vitesse entre les roues permettant de déterminer le transfert possible de couple, la différence de vitesse entre les roues étant utilisée dans le cadre d'un signal de control de déblocage d'embrayage permettant le déblocage au moins partiel de l'embrayage DGL fourni aux moyens actuels.

5. La méthode de revendication 4, dans laquelle ledit signal de contrôle de déblocage de l'embrayage est apporté en cas d'accélération latérale du véhicule telle que mesurée par un capteur d'accélération latérale connecté audit signal logique et passe en dessous un seuil prédéterminé, la condition dérivée changeant de signe.

6. La méthode de revendication 4, dans laquelle ledit signal de déblocage de l'embrayage est fournie en cas d'arrêt de l'accélération communiqué audit contrôle logique capté par un capteur d'accélération connecté audit signal logique.

7. La méthode des revendications 1 ou 2, dans laquelle ledit système de contrôle comprend également un signal logique (8) fourni par l'accélération des roues couplées audit DGL et adapté à la création d'un signal basé sur une différence de vitesse entre les roues, ledit signal logique étant connecté audit contrôleur PID de manière à fournir ledit signal audit contrôleur PID, qui sera multiplié avec le taux d'erreur de lacets ; dans laquelle ladite méthode comprend une étape de décision, dans au moins un état partiellement engagé du DGL, la différence de vitesse entre les roues permettant de déterminer le transfert possible de couple, la différence de vitesse entre les roues permettant de mesurer la vitesse de lacet du véhicule changeant de signe.

8. La méthode liée à n'importe lequel des revendications précédemment présentés, dans laquelle ledit système de contrôle comprend une logique avancée de partage-$\mu$ adapté a la pose d'un signal de contrôle devant être ajouté au signal de contrôle du contrôleur PID (3), où ladite méthode de contrôle dudit système de contrôle comprend les étapes de :

   - mesure de l'entrée d'accélération conducteur et pose d'un signal de contrôle logique de partage-$\mu$ formé proportionnellement à l'entrée d'accélération du conducteur ;
   - ajout d'un signal de contrôle logique de partage-$\mu$ au signal de sortie du contrôleur PID de manière à créer un signal pour le contrôle du DGL.

9. La méthode de revendication 8, comprenant un capteur d'angle des roues destiné à la mesure durant la conduite, ladite méthode comprenant comme étape la mesure des angles des roues, et dans laquelle le d'un signal de contrôle logique de partage-$\mu$ est limité audit angle calculé des roues.

10. La méthode de revendication 8, comprenant une mesure du taux de rotation des roues, pour la mesure d'un taux de rotation, comprenant l'étape de mesure du taux de rotation de la roue et dont le signal de contrôle logique de partage-$\mu$ est limité proportionnellement audit taux de rotation mesuré des roues.

FIG 1

FIG 2

FIG 3

FIG 4

FIG 5

FIG 6

FIG 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2406178 A